# EUROPEAN PATENT SPECIFICATION

(11) **EP 2 270 363 B1**
(45) Date of publication and mention of the grant of the patent: **30.05.2012**
(21) Application number: 10168331.6
(22) Date of filing: 02.07.2010
(51) Int. Cl.: F16H 57/02, F16H 57/04

(54) **Gearbox assembly method**
Getriebemontageverfahren
Procédé d'assemblage de boîte de vitesse

(30) Priority: 02.07.2009 GB 0911474
(43) Date of publication of application: 05.01.2011
(73) Proprietor: Nissan Motor Manufacturing (UK) Ltd., Cranfield Bedfordshire MK43 0DB (GB)
(72) Inventor: Ribas, Josep, 08040, Barcelona (ES)

(56) References cited:
- EP-A1- 1 602 861
- US-A- 4 420 990
- US-A- 5 092 196

## Description

The present invention relates to an assembly method for vehicle gearboxes or transmissions containing a spacer for reducing the volume of oil required therein.

Vehicle gearboxes or transmissions transmit torque from the engine to the driven wheels in order to match engine speed with vehicle speed. Gearboxes typically contain a number of gears mounted on shafts which can be moved with relation to one another so as to change the gearing between the gearbox input shaft and output shaft. The intermeshing of the gears causes substantial friction to be generated between the surfaces of the gear teeth. A lubricant is therefore required in order to prevent the gear teeth from wearing too quickly. Oil is typically used as the lubricant due to its ability to withstand high temperature and its ability to minimize friction between the gear teeth.

Clearly the size of the gearbox depends on the amount of torque required to be transmitted between the engine and the driven wheels. By way of an example, a six ton truck might typically have a gearbox which contains six litres of oil. This is a substantial volume of liquid to be carried around as dead weight on the vehicle. This also presents a problem in terms of oil disposal when time comes to change the gearbox oil.

However, of the six litres of oil, it is not unusual for two litres to be contained within dead spaces in the underside of the gearbox casing. Not only is this oil extra weight to be carried around by the vehicle, and extra oil to be disposed off at oil change, but the thermal mass of this oil makes the total oil volume slower to heat up, and therefore slower to reach the optimal operating temperature, at which the viscosity of the liquid delivers minimum friction.

In a known example, as disclosed in US 5,092,196, a gearbox contains a spacer or "under cover" arranged to displace a volume of gearbox oil to mitigate some of the above problems. However, the use of this spacer requires that an additional plate is the gearbox. This increases parts count and assembly time and therefore cost; and introduces an additional joint face at the bottom of the gearbox, which in turn allows a further potential leak path for gearbox oil. As the gearbox casing is made of two parts instead of one, it may be necessary to add material to the casing to avoid distortion of the casing and additional noise transmission. This would add further weight and cost to the gearbox assembly.

In another known example, EP1602861 discloses a baffle plate for a transmission. The baffle plate is installed in the transmission and separates the storage space of the housing into a space surrounding the lowermost rotating parts of the transmission. Again, this approach has drawbacks in lack of ease of assembly.

It is an object of the invention to resolve the above problems in the assembly of vehicle gearboxes comprising spacers.

According to an aspect of the present invention, there is provided a method of assembling a gearbox, said gearbox comprising: a casing having an opening and at least one bearing for rotational support of a gear shaft; a gear set, having at least two gear shafts; and at least one spacer configured for volume management of a gear lubricant and arranged to occupy a volume between at least one of the gear shafts and the casing, the method of assembling said gearbox comprising the steps: placing the at least one spacer around at least part of the gear set;
inserting the gear set and at least one spacer together into the opening in the casing; aligning at least part of the gear set with said bearing; locating at least part of the gear set into said bearing; aligning a locating feature integral with the at least one spacer with a cooperating feature provided in the casing; and sealing the gear set and at least one spacer into the casing wherein one end of the casing (16, 20) provides a closure member arranged to seal against the open end of the casing (16, 20).

Advantageously, this method allows one or more spacer(s) to be included in a gearbox without necessitating additional components to be added to the casing specifically to allow fitment of the spacer(s); whilst permitting the assembly method of the gear set into the casing to remain substantially unchanged.

In an example, the casing providing a closure member comprises at least the said one bearing arranged to support a gear shaft.

In an example, the gearbox comprises a centre casing, a forward casing to provide a closure member and a rearward casing; and the centre casing is located between the casing providing the forward closure member and the rearward casing; and the centre casing is assembled to said rearward casing before the casing providing forward closure member is connected.

In an alternative example, the gearbox comprises a centre casing, a forward casing and a rearward closure member; and the centre casing is located between the forward casing providing a closure member and the rearward closure member, and the centre casing is assembled to said forward casing before the rearward casing providing the closure member is connected.

In an example, the forward casing or closure member comprises a bell housing arranged to accommodate a clutch assembly.

It will be appreciated by those skilled in the art that at least part of the gear set may also be contained within said bell housing.

In an example, the gear set comprises a gearbox input shaft, said input shaft being mounted parallel to a gear shaft, and assembled into the casing and closure member according to the assembly method described above.

In an example, the gear set comprises a gearbox input shaft, said input shaft being mounted co-axially with a first gear shaft.

In an example, the gear set comprises a gearbox input shaft, said input shaft being mounted co-axially with a gearbox output shaft.

In a further example, the gear set comprises a selector shaft, said selector shaft being mounted parallel to a gear shaft, and assembled into the casing and closure member according to the assembly method described above.

In an example, the spacer takes the form of a spacer set comprising a series of spacers. Preferably, where the vehicle gearbox contains a plurality of spacers, said spacers are integrally formed to form a spacer set.

In an example, the spacer set comprises a spine connecting the spacers.

In an example, the spacer set comprises at least one oil channel arranged to permit fluid flow from one side of a spacer, through the spacer to its other side.

In an example, a spacer comprises further locating features arranged to locate against corresponding locating features on the closure member.

In an example, the closure member comprises locating features arranged to locate against the locating features on the spacer.

It will be understood by those skilled in the art that the gear shafts and spacer may be either partially or completely enclosed within the casing and the closure member. At the first stage of assembly, it is only necessary for the shafts and spacer to be supported sufficiently rigidly for the next stage of assembly to be carried out. The gear set may be supported by bearings or other features in the casing, or may be supported temporarily by an assembly fixture that is removed from the casing before it is sealed.

According to another aspect of the present invention, there is provided a vehicle gearbox having a gearbox casing and at least one gear shaft, the gearbox casing containing in use a volume of lubricant oil, the gearbox further including a spacer arranged in a lower portion of the gearbox casing and positioned in use to displace a volume of lubricant oil from the lower portion of the gearbox casing.

In an example, the spacers take up space in the lower portion of the gearbox which would otherwise be filled with oil. Said oil would otherwise diminish the thermal efficiency of the gearbox. The volume of oil displaced by the spacer would otherwise present a dead weight to be carried by the vehicle, and constitute an additional volume of oil to be disposed of when the gearbox oil needed changing.

In an example, the spacer has a U-shaped profile.

In an example, the gearbox contains a plurality of spacers.

In an example, the or each spacer is provided with a through hole configured to permit lubricant oil to pass from one side of the spacer to the other so as to facilitate an oil change.

It will be appreciated by one skilled in the art, that preferred and/or optional features relating to the present invention may be used either alone or in appropriate combination.

It will also be appreciated by one skilled in the art, that the method of the present invention may be suitable for use in other gearbox or transmission applications.

The invention will now be described, by way of example only, and with reference to the following drawings in which:
Figure 1 shows a sectioned view through a gearbox or transmission for a vehicle comprising a spacer which may be assembled according to the method of the present invention;
Figure 2 shows an exploded view of an example of a section of a gearbox casing and of a spacer during gearbox assembly according to the method of the present invention;
Figure 3a shows a section through a vehicle gearbox, highlighting the location of the spacer;
Figure 3b shows a detailed view of an example of a spacer; and
Figure 4 shows an exploded view of the vehicle gearbox and spacer of Figure 3 during assembly into a gearbox casing according to the method of the present invention.

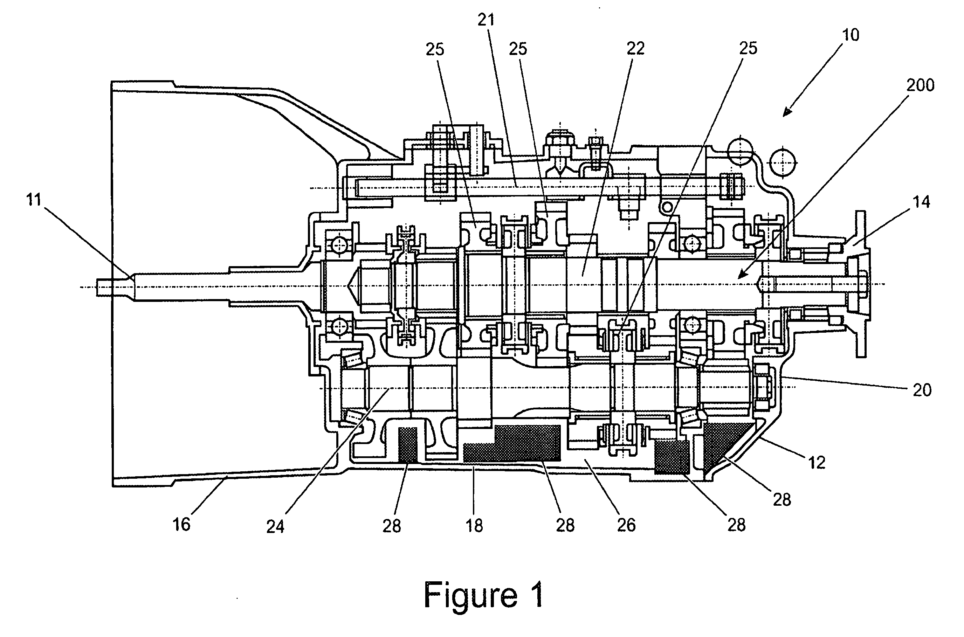

In Figure 1, a gearbox 10 is shown having a gearbox casing 12, an input shaft 11 and an output shaft 14. In the example shown, the gearbox casing 12 comprises a bell housing 16 arranged to accommodate a clutch assembly (not shown), a first section 18, which is shown as being formed integrally formed with the bell housing 16; and a second section 20. The two sections 18 and 20 are bolted together by a flange which is not shown in Figure 1 for clarity. The first section 18 and the second section 20 may also be regarded as a mid-section 18 and an end section 20. The bell housing 16 and first section 18 may optionally be separate parts, bolted together into an assembly.

The gearbox shown is a speed change gearbox for a truck or other commercial vehicle. Arranged within the gearbox 10 is a gear set 200. In the example shown, the gear set 200 comprises gear selector shaft 21, input shaft 11, idler shaft 24, and gear shaft 22; on which shafts are mounted intermeshing gears indicated non-exhaustively at 25. It is also conventional for a speed change gearbox for a vehicle to have reversing gears and a corresponding shaft therefor (not shown). The input shaft is mechanically connected to the engine, and is conventionally regarded as being located at the front of the gearbox; while the output shaft is connected to one or more driveshafts, and thus to a differential. The output shaft is generally regarded as being located at the back of the gearbox. Arranged below the idler shaft 24 is a lower portion of the gearbox indicated generally at 26.

Positioned in the lower portion 26 of the gearbox 10 is a series of spacers 28 which are positioned between the gears of the gear set 200 and secured to the gearbox casing 12 as will be described in further detail shortly.

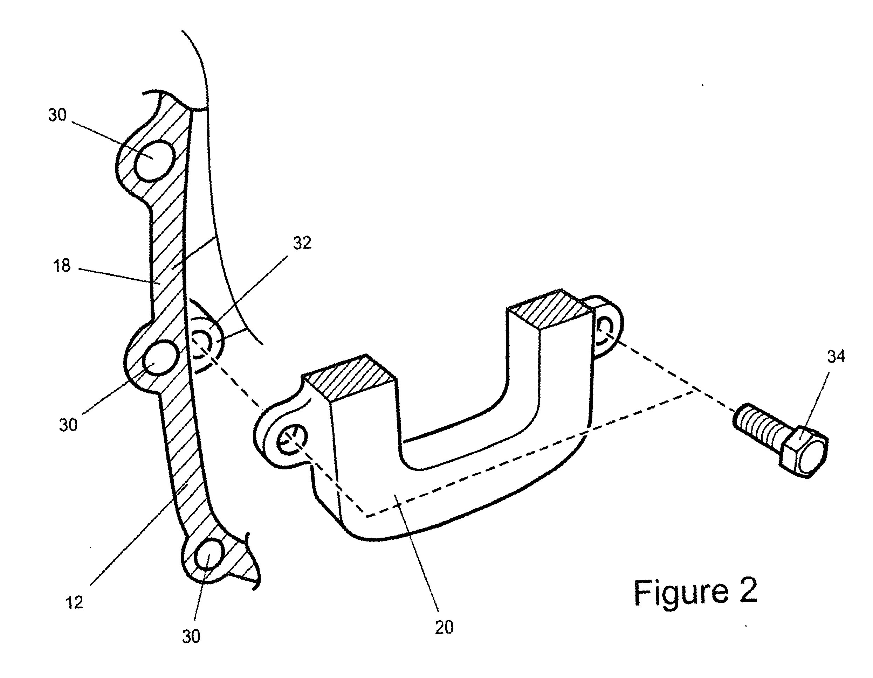

Referring now to Figure 2, a part of the first section 18 of the gearbox casing 12 is shown having bolt holes 30 for attaching the first section 18 to the second section 20 (not shown in Figure 2 for clarity). In this example, an inner face of the casing 12 has a threaded boss 32 for receiving a bolt 34 for attaching a spacer 28 to the casing 12.

In use, the spacer 28 occupies a volume formed between the gear set 200 and the gearbox casing 12 and displaces a volume of oil in the lower portion 26 of the gearbox 10 so as to reduce the total volume of oil required to lubricate the gears.

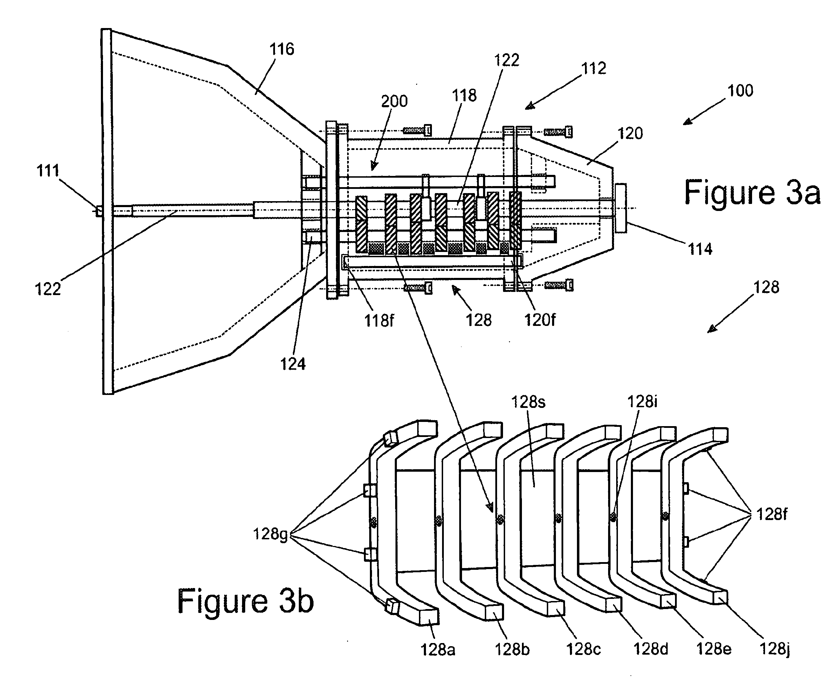

Figure 3 shows a gearbox 100 comprising an alternative embodiment of the spacer. It will be noted that like components have been given like reference numerals to aid clarity. The spacer shown in Figure 3 takes the form of a spacer set 128, a unitary device comprising a plurality of spacer elements 128a, 128b, 128c, 128d, 128e and 128j arranged to fit between the gears of the gear set 200. In order to reduce parts complexity and assembly time, the spacer elements 128a, 128b, 128c, 128d, 128e and 128j may be pre-assembled into a single piece prior to assembly into the gearbox, or may advantageously be formed in a single moulding. The spacer elements 128a, 128b, 128c, 128d, 128e and 128j are held in a spaced apart formation by a common spacer spine 128s which may be formed integrally with the spacer elements 128a, 128b, 128c, 128d, 128e and 128j. It will be appreciated by one skilled in the art that the size, shape and number of the spacer elements may be varied to suit a particular combination of gear set 200 and gearbox casing 112. Similarly, the shape of the spacer elements may be configured to improve the flow of lubricating oil around the gearbox 100.

In the example shown in Figure 3a, the gearbox casing 112 comprises three separate cast elements; namely, a bell housing 116, a mid-section 118 and an end section 120. (These components may also be regarded as a forward casing 116, a centre casing 118, and a rearward casing 120 respectively). The cast elements are securely fastened together to retain the gearbox components, to retain a volume of oil, and to prevent the ingress of foreign objects, such as dirt. Hence, casing 112 provides a fluid-tight volume into which lubricant oil may be introduced to cool and lubricate the gear set and bearings in use. As with the example shown in Figure 1, the gear set 200 comprises a gear shaft 122 and an idler shaft 124, on which are mounted intermeshing gears shown generally at 25 and shown in detail in Figure 1. The gear set 200 is contained within the gearbox casing 112 and is supported on bearings (not shown) provided in the bell housing 116 and in the end section 120. Locating features 118f, 120f are formed in the inner surfaces of the mid-section 118 and the end section 120 respectively, and are arranged to co-operate with correspondingly shaped locating features 128g, 128f formed at each end of the spacer set 128.

The locating features 128g, 128f in the example shown in Figure 3 take the form of raised features or castellations, arranged to engage with correspondingly shaped features formed in the casing 112. The surfaces of the castellations generally in alignment with the gear shaft 122 and idler shaft 124 are slightly tapered so as to facilitate alignment and to provide secure engagement between the corresponding locating features 128f, 128g and 120f, 118f respectively. The assembly operator aligns the locating features 128f of the spacer set 128 with the corresponding locating features 120f and presses the spacer set 128 firmly by hand towards the end section 120. The spacer set 128 is correctly located when abutment surfaces of the locating features 128f located between the tapered surfaces, abut corresponding surfaces in the locating features 120f. This action locates and secures the spacer set 128 in place in the end section 120 and around the gear set 200 during assembly.

Also shown in Figure 3 are a plurality of oil channels 128i formed as through holes between each spacer element 128a, 128b, 128c, 128d, 128e and 128j and the spacer spine 128s from which the spacer elements extend. The oil channels 128i are arranged to allow oil to pass from one end of the gearbox casing 112 to the other to facilitate oil changes and to ensure optimal flow of oil to and from an oil cooler (not shown).

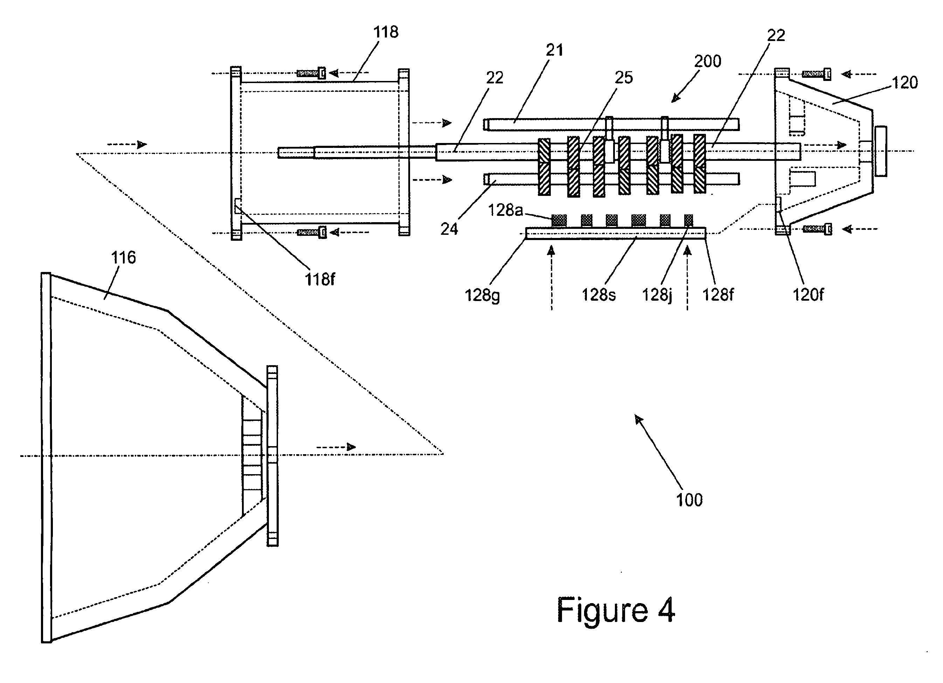

Figure 4 shows an exploded view of the gearbox of Figure 3 illustrating the order of assembly of the gearbox 100. During assembly, the gear set 200 must be aligned with corresponding bearings provided in the end section 120. Once the gear shaft 22, selector shaft 21 and idler shaft 24 have been aligned with the corresponding bearings in the end section 120, the assembly operator places the spacer set 128 in position against the gear set 200. With the spacer set 128 located against the side of the gear set 200, the assembly operator locates the gear set 200 into the corresponding bearings in the end section 120. Positioned around one face of spacer element 128j are locating features 128f arranged to co-operate with correspondingly shaped locating features 120f located around the inner edge of the end section 120. Locating features 128f and 120f are arranged to fit tightly together by friction once engaged, so locating and securing the spacer set 128 to the end section 120 during assembly. In this way, the gear set 200 and the spacer set 128 are located and secured to the end section 120 at the same time. The co-operation between the locating features 128f and 120f negates the need for the assembly operator to hold, or otherwise provide further support for the spacer set 128, once the locating features 120f and 128f are engaged. Input shaft 11 may be rotatably connected to gear shaft 22 and fitted to the gearbox simultaneously therewith; or may be fitted in a second, subsequent operation.

After the locating features 120f and 128f are engaged, the assembly operator lowers the mid-section 118 over the top of the assembly of the gear set 200 and spacer set 128, and secures the mid-section 118 to the end section 120 via bolts. The mid-section 118 has an abutment surface arranged to abut and seal against a corresponding surface of the end section 120. Once the mid-section 118 is bolted to the end section 120, the abutment surface of the mid-section 118 is in contact with both the abutment surface of the end section 120 and at least a portion of the locating features 128g of the spacer set 128. In this way, once the mid-section 118 has been secured to the end section 120, the spacer set 128 is effectively clamped between the locating features 120f of the end section 120 and the abutment face of the mid-section 118. This clamping prevents any movement of the spacer set 128 relative to the gearbox casing 112 or the gear set 200 in use. Further locating features 118f are located around the end of the mid-section 118 adjacent to the bell housing 116. Locating features 118f are arranged to correspond with locating features 128g positioned around spacer element 128a.

Finally, the assembly operator positions the bell housing 116 over the mid-section 118 and aligns the input shaft 11 or gear shaft 22, and the idler shaft 24 of the gear set 200, with corresponding bearings located in the bell housing 116. Once these parts are aligned, the assembly operator secures the bell housing 116 to the mid-section 118 via bolts. In this way, the bell housing 116 effectively provides a closure member for the gearbox casing and, once the securing bolts are correctly tightened, seals the gear set 200 within the gearbox casing, preventing ingress of unwanted objects such as dirt. Once the spacer set 128 is located by the locating features 128f and 128g in co-operation with the locating features 120f and 118f in the end section 120 and mid-section 118 respectively, the spacer set 128 is held securely in place and cannot move relative to the gearbox casing 112 or the gear set 200.

It will be appreciated by one skilled in the art, that features may be cast directly into the gearbox casing 112 which, although primarily intended to act as reinforcement webs for the casing 112, may occupy a volume that would otherwise be occupied by lubricating oil. However, such webs cannot be optimized for reducing unnecessary oil volume because they must provide sufficient clearance for the insertion of the gear set 200 into the casing 112 during assembly of the gearbox.

In an example not shown in the Figures, at least one such integrally cast reinforcement web is used as a co-operating locating feature with which the spacer engages, and to which the spacer is secured in use.

The spacer described above uses low cost and lightweight blow moulded plastics to form the spacer elements rather than relying on webs cast into the casing. This increases design layout flexibility and keeps the cost, weight and complexity of the casing to a minimum. It will also be appreciated by one skilled in the art, that the spacer may be adopted as a rolling change into an existing gearbox design with relatively minor modifications of the casing mould, required to provide the necessary locating formations for the spacer or spacer set. Furthermore, the assembly method of the gearbox is adapted for fitment of a spacer without any further additional components having to be included in the gearbox, and without any significant change to the established method of assembly of the gear set within the gearbox casing.

It will be appreciated that the size, shape and mounting technique of the spacers 28, 128 may vary within the scope of the invention. The gearbox may be assembled from back to front, but it may be preferred to assemble the gearbox from front to back, as this means that the bell housing, which is larger and heavier than the rearward casing, is static during the assembly process. In Figures 3 and 4, three casing elements are shown; but the mid-section may be combined with the bell housing 116 or with the end section 120 if required. In this case, the extended mid-section would provide the mounting points for the gear set, and the other casing part being the end section 20, 120 or bell housing 16, 116 respectively, would provide the closure member for the gearbox casing.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. A method of assembling a gearbox (10), said gearbox comprising:
a casing (16, 20) having an opening and at least one bearing for rotational support of a gear shaft;
a gear set (200), having at least two gear shafts (22, 24); and
at least one spacer (28) configured for volume management of a gear lubricant and arranged to occupy a volume between at least one of the gear shafts (22, 24) and the casing (16, 20),
the method of assembling said gearbox (10) comprising the steps:
placing the at least one spacer (28) around at least part of the gear set (200);
inserting the gear set (200) and at least one spacer (28) together into the opening in the casing (16, 20);
aligning at least part of the gear set (200) with said bearing;
locating at least part of the gear set (200) into said bearing;
aligning a locating feature (128f, 128g) integral with the at least one spacer (28) with a cooperating feature (118f, 120f) provided in the casing (16, 20); and sealing the gear set (200) and at least one spacer (28) into the casing (16, 20)
wherein one end of the casing (16, 20) provides a closure member arranged to seal against the open end of the casing (16, 20).

2. A method of assembling a gearbox (10) according to claim, 1, wherein the casing (16, 20) providing a closure member comprises at least the said one bearing arranged to support a gear shaft.

3. A method of assembling a gearbox (10) according to claim 1 or claim 2, wherein the gearbox comprises a centre casing (18), a forward casing 116 to provide a closure member and a rearward casing (20);
and the centre casing (18) is located between the forward casing (116) providing the closure member and the rearward casing (20);
and the centre casing (18) is assembled to said rearward casing (20) before the forward casing providing the closure member is connected.

4. A method of assembling a gearbox (10) according to claim 1 or claim 2,
wherein the gearbox comprises a centre casing (18), a forward casing (16) and a rearward casing (20) providing a closure member;
and the centre casing (18) is located between the forward casing (16) and the rearward casing (20) providing the closure member);
and the centre casing (18) is assembled to said forward casing (16) before the rearward casing (20) providing the closure member is connected.

5. A method of assembling a gearbox (10) according to any preceding claim,
wherein the forward casing (16) providing a closure member comprises a bell housing arranged to accommodate a clutch assembly.

6. A method of assembling a gearbox (10) according to any preceding claim,
wherein the gear set comprises a gearbox input shaft (11), said input shaft being mounted parallel to a gear shaft (22).

7. A method of assembling a gearbox (10) according to claim 6, wherein the gearbox input shaft (11) is mounted co-axially with a first gear shaft (22).

8. A method of assembling a gearbox (10) according to claim 6 or claim 7,
wherein the gearbox input shaft (11) is mounted co-axially with a gearbox output shaft (14).

9. A method of assembling a gearbox (10) according to any preceding claim,
wherein the gear set (200) comprises a selector shaft (21), said selector shaft being mounted parallel to a gear shaft (22).

10. A method of assembling a gearbox (10) according to any preceding claim,
where the spacer (28) is a spacer set (128) comprising a series of spacers (128a, 128b, 128c, 128d, 128e, 128j).

11. A method of assembling a gearbox (10) according to claim, 10, where the spacer set (128) comprises a spine (128s) connecting the spacers (128a, 128b, 128c, 128d, 128e, 128j).

12. A method of assembling a gearbox (10) according to claim 10 or claim 11,
where the spacer set (128) comprises at least one oil channel (128i) arranged to permit fluid flow from one side of a spacer, through the spacer to another side of said spacer.

13. A method of assembling a gearbox (10) according to any preceding claim,
wherein a spacer (28) comprises further locating features (128g, 128f) arranged to locate against locating features on the casing (16, 20) providing a closure member.

14. A method of assembling a gearbox (10) according to claim, 8, wherein the closure member (20, 16) comprises locating features (120f, 118f) arranged to locate against the locating features (128f, 128g) on the spacer (28).

## Patentansprüche

1. Verfahren zum Montieren eines Getriebes (10), wobei das Getriebe Folgendes umfasst:
ein Gehäuse (16, 20), das eine Öffnung und mindestens ein Lager für die drehbare Lagerung einer Radwelle aufweist,
einen Zahnradsatz (200), der mindestens zwei Radwellen (22, 24) aufweist, und
mindestens einen Abstandshalter (28), der für die Volumenbeeinflussung eines Zahnradschmiermittels eingerichtet ist und angeordnet ist, um ein Volumen zwischen mindestens einer der Radwellen (22, 24) und dem Gehäuse (16, 20) einzunehmen,
wobei das Verfahren zum Montieren des Getriebes (10) folgende Schritte umfasst:
Platzieren des mindestens einen Abstandshalters (28) um mindestens einen Teil des Zahnradsatzes (200),
Einsetzen des Zahnradsatzes (200) und mindestens einen Abstandshalters (28) gemeinsam in die Öffnung im Gehäuse (16, 20),
Ausrichten mindestens eines Teils des Zahnradsatzes (200) nach dem Lager,
Positionieren mindestens eines Teils des Zahnradsatzes (200) in dem Lager,
Ausrichten eines Positionierelements (128f, 128g), das einteilig mit dem mindestens einen Abstandshalter (28) ist, nach einem mitwirkenden Element (118f, 120f), das im Gehäuse (16, 20) vorgesehen ist, und
Abdichten des Zahnradsatzes (200) und mindestens einen Abstandshalters (28) im Gehäuse (16, 20),
wobei ein Ende des Gehäuses (16, 20) ein Verschlussmittel vorsieht, das angeordnet ist, um am offenen Ende des Gehäuses (16, 20) abzudichten.

2. Verfahren zum Montieren eines Getriebes (10) nach Anspruch 1, wobei das Gehäuse (16, 20), das ein Verschlusselement vorsieht, mindestens das eine Lager umfasst, das angeordnet ist, um eine Radwelle zu lagern.

3. Verfahren zum Montieren eines Getriebes (10) nach Anspruch 1 oder Anspruch 2,
wobei das Getriebe ein mittleres Gehäuse (18), ein vorderes Gehäuse (116), um ein Verschlusselement vorzusehen, und ein hinteres Gehäuse (20) umfasst,
und das mittlere Gehäuse (18) zwischen dem vorderen Gehäuse (116), das das Verschlusselement vorsieht, und dem hinteren Gehäuse (20) angeordnet ist,
und das mittlere Gehäuse (18) an dem hinteren Gehäuse (20) montiert wird, bevor das vordere Gehäuse, das das Verschlusselement vorsieht, angefügt wird.

4. Verfahren zum Montieren eines Getriebes (10) nach Anspruch 1 oder Anspruch 2,
wobei das Getriebe ein mittleres Gehäuse (18), ein vorderes Gehäuse (16) und ein hinteres Gehäuse (20), das ein Verschlusselement vorsieht, umfasst,
und das mittlere Gehäuse (18) zwischen dem vorderen Gehäuse (16) und dem hinteren Gehäuse (20), das das Verschlusselement vorsieht, angeordnet ist,
und das mittlere Gehäuse (18) an dem vorderen Gehäuse (16) montiert wird, bevor das hintere Gehäuse (20), das das Verschlusselement vorsieht, angefügt wird.

5. Verfahren zum Montieren eines Getriebes (10) nach einem vorhergehenden Anspruch, wobei das vordere Gehäuse (16), das ein Verschlusselement vorsieht, eine Kupplungsglocke umfasst, die angeordnet ist, um eine Kupplungsbaugruppe aufzunehmen.

6. Verfahren zum Montieren eines Getriebes (10) nach einem vorhergehenden Anspruch, wobei der Zahnradsatz eine Getriebeeingangswelle (11) umfasst, wobei die Eingangswelle parallel zu einer Radwelle (22) montiert wird.

7. Verfahren zum Montieren eines Getriebes (10) nach Anspruch 6, wobei die Getriebeeingangswelle (11) koaxial zu einer ersten Radwelle (22) montiert wird.

8. Verfahren zum Montieren eines Getriebes (10) nach Anspruch 6 oder Anspruch 7, wobei die Getriebeeingangswelle (11) koaxial zu einer Getriebeausgangswelle (14) montiert wird.

9. Verfahren zum Montieren eines Getriebes (10) nach einem vorhergehenden Anspruch, wobei der Zahnradsatz (200) eine Schaltwelle (21) umfasst, wobei die Schaltwelle parallel zu einer Radwelle (22) montiert wird.

10. Verfahren zum Montieren eines Getriebes (10) nach einem vorhergehenden Anspruch, wobei der Abstandshalter (28) eine Abstandshaltergruppe (128) ist, die eine Reihe von Abstandshaltern (128a, 128b, 128c, 128d, 128e, 128j) umfasst.

11. Verfahren zum Montieren eines Getriebes (10) nach Anspruch 10, wobei die Abstandshaltergruppe (128) einen Rücken (128s) umfasst, der die Abstandshalter (128a, 128b, 128c, 128d, 128e, 128j) verbindet.

12. Verfahren zum Montieren eines Getriebes (10) nach Anspruch 10 oder Anspruch 11, wobei die Abstandshaltergruppe (128) mindestens einen Ölkanal (128i) umfasst, der angeordnet ist, um Fluid von einer Seite eines Abstandshalters durch den Abstandshalter zu einer anderen Seite des Abstandshalters fließen zu lassen.

13. Verfahren zum Montieren eines Getriebes (10) nach einem vorhergehenden Anspruch, wobei ein Abstandshalter (28) weitere Positionierelemente (128g, 128f) umfasst, die angeordnet sind, um an Positionierelementen an dem Gehäuse (16, 20), das ein Verschlusselement vorsieht, zu liegen.

14. Verfahren zum Montieren eines Getriebes (10) nach Anspruch 8, wobei das Verschlusselement (20, 16) Positionierelemente (120f, 118f) umfasst, die angeordnet sind, um an den Positionierelementen (128f, 128g) an dem Abstandshalter (28) zu liegen.

## Revendications

1. Procédé d'assemblage d'une boîte d'engrenages (10), ladite boîte d'engrenages comprenant :
un carter (16, 20) ayant une ouverture et au moins un palier pour le support en rotation d'un arbre de transmission ;
un train d'engrenages (200), ayant au moins deux arbres de transmission (22, 24) ; et
au moins une entretoise (28) configurée pour la gestion de volume d'un lubrifiant d'engrenages et agencée pour occuper un volume entre au moins l'un des arbres de transmission (22, 24) et le carter (16, 20),
le procédé d'assemblage de ladite boîte d'engrenages (10) comprenant les étapes suivantes :
le placement de l'au moins une entretoise (28) autour d'au moins une partie du train d'engrenages (200) ;
l'insertion conjointe du train d'engrenages (200) et d'au moins une entretoise (28) dans l'ouverture dans le carter (16, 20) ;
l'alignement d'au moins une partie du train d'engrenages (200) avec ledit palier ;
le positionnement d'au moins une partie du train d'engrenages (200) dans ledit palier ;
l'alignement d'un repère de positionnement (128f, 128g) faisant partie intégrante de l'au moins une entretoise (28) avec un repère coopérant (118f, 120f) fourni dans le carter (16, 20) ; et
le scellement du train d'engrenages (200) et d'au moins une entretoise (28) dans le carter (16, 20)
dans lequel une extrémité du carter (16, 20) fournit un élément de fermeture agencé pour se sceller contre l'extrémité ouverture du carter (16, 20).

2. Procédé d'assemblage d'une boîte d'engrenages (10) selon la revendication 1, dans lequel le carter (16, 20) fournissant un élément de fermeture comprend au moins ledit un palier agencé pour supporter un arbre de transmission.

3. Procédé d'assemblage d'une boîte d'engrenages (10) selon la revendication 1 ou la revendication 2, dans lequel la boîte d'engrenages comprend un carter central (18), un carter avant (116) pour fournir un élément de fermeture et un carter arrière (20) ;
et le carter central (18) est situé entre le carter avant (116) fournissant l'élément de fermeture et le carter arrière (20) ;
et le carter central (18) est assemblé sur ledit carter arrière (20) avant le raccordement du carter avant fournissant l'élément de fermeture.

4. Procédé d'assemblage d'une boîte d'engrenages (10) selon la revendication 1 ou la revendication 2, dans lequel la boîte d'engrenages comprend un carter central (18), un carter avant (16) et un carter arrière (20) fournissant un élément de fermeture ;
et le carter central (18) est situé entre le carter avant (16) et le carter arrière (20) fournissant l'élément de fermeture ;
et le carter central (18) est assemblé sur ledit carter avant (16) avant le raccordement du carter arrière (20) fournissant l'élément de fermeture.

5. Procédé d'assemblage d'une boîte d'engrenages (10) selon l'une quelconque des revendications précédentes, dans lequel le carter avant (16) fournissant un élément de fermeture comprend un logement en cloche agencé pour abriter un ensemble d'embrayage.

6. Procédé d'assemblage d'une boîte d'engrenages (10) selon l'une quelconque des revendications précédentes, dans lequel le train d'engrenages comprend un arbre d'entrée de boîte d'engrenages (11), ledit arbre d'entrée étant monté parallèlement à un arbre de transmission (22).

7. Procédé d'assemblage d'une boîte d'engrenages (10) selon la revendication 6, dans lequel l'arbre d'entrée de boîte d'engrenages (11) est monté coaxialement à un premier arbre de transmission (2).

8. Procédé d'assemblage d'une boîte d'engrenages (10) selon la revendication 6 ou la revendication 7, dans lequel l'arbre d'entrée de boîte d'engrenages (11) est monté coaxialement à un arbre de sortie de boîte d'engrenages (14).

9. Procédé d'assemblage d'une boîte d'engrenages (10) selon l'une quelconque des revendications précédentes, dans lequel le train d'engrenages (200) comprend un arbre sélecteur (21), ledit arbre sélecteur étant monté parallèlement à un arbre de transmission (22).

10. Procédé d'assemblage d'une boîte d'engrenages (10) selon l'une quelconque des revendications précédentes, dans lequel l'entretoise (28) est un jeu d'entretoises (128) comprenant une série d'entretoises (128a, 128b, 128c, 128d, 128e, 128j).

11. Procédé d'assemblage d'une boîte d'engrenages (10) selon la revendication 10 précédentes, dans lequel le jeu d'entretoises (128) comprend un axe (128s) connectant les entretoises (128a, 128b, 128c, 128d ,128e, 128j).

12. Procédé d'assemblage d'une boîte d'engrenages (10) selon la revendication 10 ou la revendication 11, dans lequel le jeu d'entretoises (128) comprend au moins une gorge à huile (128i) agencée pour permettre un écoulement de fluide depuis un côté d'une entretoise, à travers l'entretoise jusqu'à un autre côté de ladite entretoise.

13. Procédé d'assemblage d'une boîte d'engrenages (10) selon l'une quelconque des revendications précédentes, dans lequel une entretoise (28) comprend d'autres repères de positionnement (128g, 128f) agencés pour son positionnement contre des repères de positionnement sur le carter (16, 20) fournissant un élément de fermeture.

14. Procédé d'assemblage d'une boîte d'engrenages (10) selon la revendication 8, dans lequel l'élément de fermeture (20, 16) comprend des repères de positionnement (120f, 118f) agencés pour son positionnement contre les repères de positionnement (128f, 128g) sur l'entretoise (28).
